# EUROPEAN PATENT SPECIFICATION

(11) **EP 1 691 119 B1**
(45) Date of publication and mention of the grant of the patent: **26.12.2007**
(21) Application number: 06002626.7
(22) Date of filing: 09.02.2006
(51) Int. Cl.: F16K 17/168, F24D 19/08

(54) **Automatic bleeder valve**
Automatisches Entlüftungsventil
Soupape d'aération automatique

(30) Priority: 11.02.2005 IT MI20050040 U
(43) Date of publication of application: 16.08.2006
(73) Proprietor: WATTS INDUSTRIES ITALIA S.r.l., Bolzano (IT)
(72) Inventor: Molinari, Roberto c/o Watts Ind. Italia s.r.l., 20046 Biassono (MI) (IT)
(74) Representative: Raimondi, Margherita

(56) References cited:
- EP-A- 0 265 653
- DE-A1- 19 500 062
- US-A- 4 103 704

## Description

The present invention relates to a bleeder valve, in particular for fluid recirculating systems, equipped with means for stably retaining on the valve body the device for manually opening/closing the bleeder.

It is known in the technical sector relating to fluid recirculating systems such as water supply systems, in particular of the plumbing/heating/sanitary type, that there exists the need to provide automatic valves for bleeding the air which prevents correct recirculation of the fluid inside the pipes; said valves are generally mounted on the highest parts - or on suitable points - of the said system or installed at the highest point of the boilers or directly inside the pump which causes circulation of the liquid in the heating circuit.

For this purpose, valves have been designed such that they comprise a bell piece equipped with automatic means for bleeding the air present in the said system and a float able to float on the free surface of the liquid and connected to said bleeder means so as to open/close them.

It is also known that when the boiler manufacturers perform a hydraulic test on the boiler, namely check that all the connections are fluid-tight, they are able to proceed in two ways, performing a water test or an air test.

The air test is the most rapid, most accurate and least expensive, but conflicts with the operating principle of the bleeder device (the function of which is precisely to discharge the air present in the circuit) since the float, if it is not supported by the liquid, is free to move downwards, causing in this way opening of the valve, thereby opening the escape point which prevents correct testing of the boiler.

An example of such a valve is known, for example, from IT-MI03U 125 in the name of the present applicants.

Although performing their function, these valves nevertheless have the drawback due to the fact that, in order to allow said closing operation during testing and/or maintenance, the valves are equipped with a cap - made of plastic or metallic material - generally mounted on the valve bleeder fixture by means of a screw/female thread connection which is not totally reliable as regards the vibrations affecting the valve during transportation, said vibrations being able to cause unscrewing of the said cap with consequent loss of the part, making the valve no longer usable since it cannot be closed/opened.

In addition to this, the presence of any mould separating burrs or extraneous material due to the part production process - usually plastic injection moulding - obliges the user to apply a cap tightening torque which depends on the defective nature of the part and its deformability.

An air blender valve as that described in the preamble of claim 1 has already been shown in document EP 0265653.

The technical problem which is posed, therefore, is that of providing a device for manually opening/closing bleeder valves, able to remain firmly fastened to the valve during any assembly, transportation or on-site installation operation, ensuring a correct seal during the plant testing operations, irrespective as to the greater or lesser degree of tightening performed.

In connection with this problem it is also required that this device should have small dimensions circuit) since the float, if it is not supported by the liquid, is free to move downwards, causing in this way opening of the valve, thereby opening the escape point which prevents correct testing of the boiler.

An example of such a valve is known, for example, from IT-MI03U 125 in the same of the present applicants.

Although performing their function, these valves nevertheless have the drawback due to the fact, in order to allow said closing operation during testing and/or maintenance, the valves are equipped with a cap - made of plastic or metallic material - generally mounted on the valve bleeder fixture by means of a screw/female thread connection which is not totally reliable as regards the vibrations affecting the valve during transportation, said vibrations being able to cause unscrewing of the said cap with consequent loss of the part, making the valve no longer usable since it cannot be closed/opened.

In addition to this, the presence of any mould separating burrs or extraneous material due to the part production process - usually plastic injection moulding - obliges the user to apply a cap tightening torque which depends on the defective nature of the part and its deformability.

An air bleeder valve as that described in the preamble of claim 1 has already been shown in document EP 0 265 653.

The technical problem which is posed, therefore, is that of providing a device for manually opening/closing bleeder valves, able to remain firmly fastened to the valve during any assembly, transportation or on-site installation operation, ensuring a correct seal during the plant testing operations, irrespective as to the greater or lesser degree of tightening performed.

In connection with this problem it is also required that this device should have small dimensions and be easy and inexpensive to produce and assemble, also using automated processes, and be obvious to operate and easy to manipulate even when the valve is installed in positions which are difficult to access.

These results are achieved according to the present invention by an air bleeder valve for fluid recirculating systems, comprising a bell piece which is provided with a longitudinal extension and which has, arranged inside it, automatic means for controlling bleeding of the air present inside the said system and means for manually opening/closing the valve, said manual opening/closing means comprising: a first element able to interfere with a corresponding first projection on the valve body so as to produce stable fastening of the device to the said bell piece and a movement in the longitudinal direction of the opening/closing means with respect to the valve body, and a second element integral with the opening/closing means and able to interfere with a corresponding second projection on the valve body so as to produce stable positioning of the means in an axial position for opening or closing the valve.

Further details may be obtained from the following description of a non-limiting example of embodiment of the subject of the present invention provided with reference to the accompanying drawings in which:
- Figure 1 shows a partially exploded view of a bleeder valve with a manual opening/closing device according to the present invention;
- Figure 2 shows a front view of the valve according to Fig. 1 when open;
- Figure 3 shows a schematic, partially sectioned front view of the valve according to Fig. 1 when closed; and
- Figure 4 shows a view, similar to that of Fig. 3, of the valve when open.

As shown and with reference to a pair of axes, i.e. longitudinal (vertical) axis X-X, and transverse (horizontal) axis Y-Y, respectively, which are assumed solely for the sake of convenience of the description, the valve according to the present invention is of the conventional type, which can be operated so as to open/close by means of a lever (not shown), one end of which is joined to a sealing member which intercepts a transverse bleeder duct and the other end of which is joined to an actuating float 20 which is free to slide inside a bell piece 10 in both senses longitudinally between two end-of-travel positions, i.e. an upper position and lower position, respectively defined by the upper limit for floating on the water and by guiding and retaining means, not shown nor described in that they are known per se.

Said bleeder duct, which is parallel to the transverse axis and intercepted by the opening/closing lever connected to the float 20, emerges inside a second through-duct 11 which is open outwards and substantially parallel to the longitudinal axis and formed inside an extension 30 - upper extension in the example - of the body of the bell piece 10.

Said extension 30 is cylindrical in shape with longitudinal rails 30a and has a coaxial annular groove 30b for seating a sealing member 1, which in the example is an O-ring.

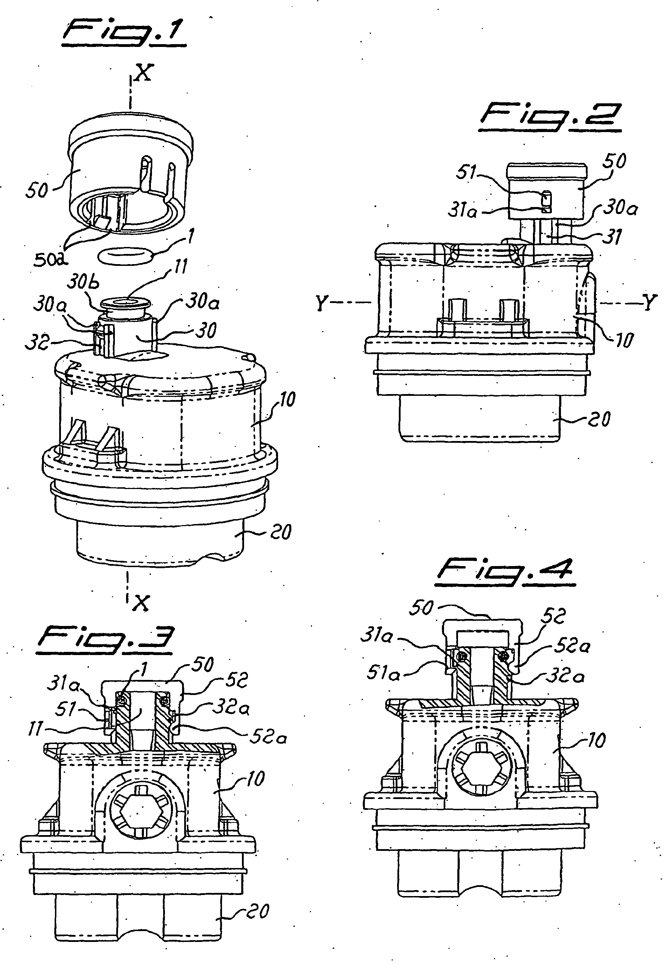

The longitudinal rails 30a are suitable for mating with corresponding guides 50a (Fig. 1) formed on the inner surface of a cap 50 for closing/opening the valve - described more fully below - which may thus be axially mounted onto the extension 30 on which it is able to move displaceably in both directions, while being locked rotationally.

The rails 30a define a first seat 31 and a second seat 32, inside which a respective projection 31a and 32a is formed; the two projections are preferably arranged at a different height in the longitudinal direction.

Conveniently the projection 31a has the form of a transverse hook, while the other projection 32a has a cross-section substantially in the form of an isosceles trapezium with its bases arranged parallel to the longitudinal axis and more or less rounded corners.

The hook-shaped projection 31a is able to cooperate with a slit 51 formed in the side surface of the cap 50 and extending in the longitudinal direction so that the two opposite transverse edges 51a are able to come into contact with said hook 31a, defining two end-of-travel positions, i.e. valve open (= bottom edge) and valve closed (= top edge), respectively.

Alternatively, it is envisaged that the size of the slit is such that only the bottom transverse edge 51a is used as the "valve open" end-of-travel stop, while the "valve closed" end-of-travel position is determined by contact of the front inner surface of the cap 50 against the corresponding surface of the extension 30.

The trapezoidal projection 32a is able to cooperate with a transverse end extension 52a of a resilient tongue 52 which is integral with the cap 50 and extends parallel to the longitudinal axis X-X, so as to cause mutual interference between the projection 32a and the said free end 52a of the tongue 52, as will be explained more fully below.

The operating principle of the valve is as follows:
- once the extension 30 is prepared with the sealing O-ring 1 seated inside the corresponding groove 30b;
- the cap 50 is mounted in the axial direction;
- this causes mutual interference between the projection 32a and the free edge 52a of the tongue 52 of the cap 50;
- as a result, the tongue 52 yields elastically, allowing the cap 50 to be fitted in the axial direction;
- this fitting operation is performed until the hook 31a is inserted inside the corresponding slit 51 of the cap 50;
- as a result mutual interference occurs in the axial direction between the said hook and the transverse edges 51a of the slit, said interference preventing separation of the cap from the valve body;
- the cap at this point may be operated by means of a pushing force in the longitudinal direction,
- outwards, in order to open the valve (Fig. 4), so that the hook 31a is situated in the bottom end-of-travel position and the end 52a of the tongue 52 is situated above the projection 32a, the valve thereby being placed in communication with the external environment by means of the said slit 51;
- or inwards, so as to close the valve (Fig. 3) and arrange the projection 32a in the bottom end-of-travel position and the end of the tongue 52 underneath the projection 32a, so as to intercept the bleeder duct externally and close the valve.

It is therefore clear how, with the device for manually opening/closing a bleeder valve according to the invention, testing and/or maintenance of recirculating systems can be performed in an easy, precise and obvious manner, while stable fastening of the associated opening/closing device to the said valve is ensured, separation of the cap 50 in fact being prevented by interference between the projection 31a and the slit 51 in the said cap.

In addition to this, the possibility of operating the cap with an axial pushing movement - instead of a screwing/unscrewing action - allows both easier manipulation, even in the case of valves situated in positions which are difficult to reach (in this case it is also possible to use a tool), and very obvious operation where cap up = valve open or cap down = valve closed, such that the possibility of errors during operation is reduced.

## Claims

1. Air bleeder valve for fluid recirculating systems, comprising a bell piece (10) which is provided with a longitudinal extension (30) and which has, arranged inside it, automatic means (20) for controlling bleeding of the air present inside the said system and means (50) for manually opening/closing the valve, **characterized in that** said manual opening/closing means (50) comprise:
- a first element (51) able to interfere with a corresponding first projection (31a) on the valve body so as to produce stable fastening of the device (50) to the said bell piece (10) and a movement in the longitudinal direction of the opening/closing means (50) with respect to the valve body;
- a second element (52a) integral with the means (50) and able to interfere with a corresponding second projection (32a) on the valve body so as to produce stable positioning of the means (50) in two different axial positions, i.e. for opening or closing the valve, respectively.

2. Valve according to Claim 1, **characterized in that** said extension (30) is cylindrical in shape and has a coaxial annular groove (30b) for seating a sealing member (1).

3. Valve according to Claim 2, **characterized in that** said sealing member (1) is an O-ring.

4. Valve according to Claim 1, **characterized in that** said extension (30) has longitudinal rails (30a).

5. Valve according to Claim 4, **characterized in that** said longitudinal rails (30a) define at least one first longitudinal seat (31) and at least one second longitudinal seat (32).

6. Valve according to Claim 1, **characterized in that** said first projection (31a) is arranged inside the first seat (31).

7. Valve according to Claim 1, **characterized in that** said second projection (32a) is arranged inside the second seat (32).

8. Valve according to Claim 1, **characterized in that** said first interfering element (51) consists of a slit (51) formed in the side surface of the cap (50) and extending in the longitudinal direction.

9. Valve according to Claim 8, **characterized in that** said slit has transverse opposite edges (51a) able to determine at least one end-of-travel position corresponding to a "valve open" condition.

10. Valve according to Claim 9, **characterized in that** the second end-of-travel position corresponding to a "valve closed" condition is determined by contact of the front inner edge of the cap (50) against the corresponding front surface of the extension (30).

11. Valve according to Claim 8, **characterized in that** said slit has opposite transverse edges (51a) able to determine two end-of-travel positions corresponding to a "valve open" or "valve closed" condition.

12. Valve according to Claim 1, **characterized in that** said second interfering element (52a) of the opening/closing means (50) consists of a transverse end extension of a resilient tongue (52) integral with the cap (50) and extending parallel to the longitudinal axis (X-X).

13. Valve according to Claim 12, **characterized in that** said transverse extension (52a) of the tongue (52) has a rounded shape.

14. Valve according to Claim 1, **characterized in that** said second projection (32a) of the extension (30) of the valve body has a cross-section substantially in the form of an isosceles trapezium with bases arranged parallel to the longitudinal axis.

15. Valve according to Claim 14, **characterized in that** the corners of said trapezoidal projection are rounded.

## Patentansprüche

1. Entlüftungsventil für Fluidrückführungssysteme mit einem Glockenstück (10), das mit einer Längsverlängerung (30) versehen ist und das in diesem angeordnet ein automatisches Mittel (20) zum Steuern der Entlüftung der innerhalb des Systems vorhandenen Luft aufweist, und einem Mittel (50) zum manuellen Öffnen/Schließen des Ventils **dadurch gekennzeichnet, dass** das Mittel (50) zum manuellen Öffnen/Schließen umfasst:
- ein erstes Element (51), das mit einem entsprechenden ersten Vorsprung (31a) am Ventilkörper in Eingriff kommen kann, um eine stabile Befestigung der Vorrichtung (50) am Glockenstück (10) und eine Bewegung des Öffnungs-/Schließmittels (50) in Bezug auf den Ventilkörper in der Längsrichtung zu erzeugen;
- ein mit dem Mittel (50) einteiliges zweites Element (52a), das mit einem entsprechenden zweiten Vorsprung (32a) am Ventilkörper in Eingriff kommen kann, um eine stabile Positionierung des Mittels (50) in zwei verschiedenen axialen Positionen, d.h. zum Öffnen bzw. Schließen des Ventils, zu erzeugen.

2. Ventil nach Anspruch 1, **dadurch gekennzeichnet, dass** die Verlängerung (30) eine zylindrische Form aufweist und eine koaxiale ringförmige Nut (30b) zum Einsetzen eines Dichtungselements (1) aufweist.

3. Ventil nach Anspruch 2, **dadurch gekennzeichnet, dass** das Dichtungselement (1) ein O-Ring ist.

4. Ventil nach Anspruch 1, **dadurch gekennzeichnet, dass** die Verlängerung (30) Längsschienen (30a) aufweist.

5. Ventil nach Anspruch 4, **dadurch gekennzeichnet, dass** die Längsschienen (30a) mindestens einen ersten Längssitz (31) und mindestens einen zweiten Längssitz (32) definieren.

6. Ventil nach Anspruch 1, **dadurch gekennzeichnet, dass** der erste Vorsprung (31a) innerhalb des ersten Sitzes (31) angeordnet ist.

7. Ventil nach Anspruch 1, **dadurch gekennzeichnet, dass** der zweite Vorsprung (32a) innerhalb des zweiten Sitzes (32) angeordnet ist.

8. Ventil nach Anspruch 1, **dadurch gekennzeichnet, dass** das erste Eingriffselement (51) aus einem Schlitz (51) besteht, der in der Seitenfläche der Kappe (50) ausgebildet ist und sich in der Längsrichtung erstreckt.

9. Ventil nach Anspruch 8, **dadurch gekennzeichnet, dass** der Schlitz entgegengesetzte Querkanten (51a) aufweist, die mindestens eine Bewegungsendposition, die einem Zustand eines "offenen Ventils" entsprechen, festlegen können.

10. Ventil nach Anspruch 9, **dadurch gekennzeichnet, dass** die zweite Bewegungsendposition, die einem Zustand eines "geschlossenen Ventils" entspricht, durch den Kontakt der vorderen inneren Kante der Kappe (50) mit der entsprechenden vorderen Oberfläche der Verlängerung (30) festgelegt ist.

11. Ventil nach Anspruch 8, **dadurch gekennzeichnet, dass** der Schlitz entgegengesetzte Querkanten (51a) aufweist, die zwei Bewegungsendpositionen festlegen können, die einem Zustand eines "offenen Ventils" oder "geschlossenen Ventils" entsprechen.

12. Ventil nach Anspruch 1, **dadurch gekennzeichnet, dass** das zweite Eingriffselement (52a) des Öffnungs-/Schließmittels (50) aus einer Querendverlängerung einer mit der Kappe (50) einteiligen elastischen Zunge (52) besteht, die sich parallel zur Längsachse (X-X) erstreckt.

13. Ventil nach Anspruch 12, **dadurch gekennzeichnet, dass** die Querverlängerung (52a) der Zunge (52) eine abgerundete Form aufweist.

14. Ventil nach Anspruch 1, **dadurch gekennzeichnet, dass** der zweite Vorsprung (32a) der Verlängerung (30) des Ventilkörpers einen Querschnitt im Wesentlichen in Form eines gleichschenkligen Trapezes mit Basen, die parallel zur Längsachse angeordnet sind, aufweist.

15. Ventil nach Anspruch 14, **dadurch gekennzeichnet, dass** die Ecken des trapezförmigen Vorsprungs abgerundet sind.

## Revendications

1. Valve de purge d'air pour des systèmes à circulation de fluide, comprenant une pièce (10) en forme de cloche qui présente un prolongement longitudinal (30) et qui comporte, placé intérieurement, des moyens automatiques (20) pour contrôler la purge de l'air présent à l'intérieur dudit système et des moyens manuels (50) d'ouverture/fermeture de la valve, ***caractérisée en ce que*** lesdits moyens manuels d'ouverture/fermeture (50) comprennent :
- un premier élément (51) apte à interférer avec une première saillie (31a) ménagée sur le corps de la valve de manière à assurer une fixation stable du dispositif (50) sur ladite pièce (10) en forme de cloche et un mouvement dans la direction longitudinale des moyens d'ouverture/fermeture (50) par rapport au corps de la valve ;
- un deuxième élément (52a) solidaire des moyens (50) et apte à interférer avec une deuxième saillie correspondante (32a) sur le corps de la valve afin de produire un positionnement stable des moyens (50) dans deux positions axiales différentes, à savoir pour l'ouverture ou la fermeture de la valve, respectivement.

2. Valve selon la revendication 1, ***caractérisée en ce que*** ledit prolongement (30) est de forme cylindrique et comporte une gorge annulaire coaxiale (30b) destinée à recevoir un élément d'étanchéité (1).

3. Valve selon la revendication 2, ***caractérisée en ce que*** ledit élément d'étanchéité (1) est un joint torique.

4. Valve selon la revendication 1, ***caractérisée en ce que*** ledit prolongement (30) comporte des rails longitudinaux (30a).

5. Valve selon la revendication 4, ***caractérisée en ce que*** lesdits rails longitudinaux (30a) définissent au moins un premier siège longitudinal (31) et au moins un deuxième siège longitudinal (32).

6. Valve selon la revendication 1, ***caractérisée en ce que*** ladite première saillie (31a) est située à l'intérieur du premier siège (31).

7. Valve selon la revendication 1, ***caractérisée en ce que*** ladite deuxième saillie (32a) est située à l'intérieur du deuxième siège (32).

8. Valve selon la revendication 1, ***caractérisée en ce que*** ledit premier élément interférant (51) est constitué par une fente (51) formée dans la surface latérale du capuchon (50) et s'étendant dans la direction longitudinale.

9. Valve selon la revendication 8, ***caractérisée en ce que*** ladite fente possède des bords opposés transversaux (51a) aptes à déterminer au moins une position de fin de course correspondant à une situation de "valve ouverte".

10. Valve selon la revendication 9, ***caractérisée en ce que*** la deuxième position de fin de course correspondant à une situation de "valve fermée" est déterminée par contact du bord intérieur antérieur du capuchon (50) contre la surface antérieure correspondante du prolongement (30).

11. Valve selon la revendication 8, ***caractérisée en ce que*** ladite fente possède des bords transversaux opposés (51a) aptes à déterminer deux positions de fin de course correspondant à une situation de "valve ouverte" ou de "valve fermée".

12. Valve selon la revendication 1, ***caractérisée en ce que*** ledit deuxième élément interférant (52a) des moyens d'ouverture/fermeture (50) est constitué par un prolongement terminal transversal d'une languette résiliente (52) solidaire du capuchon (50) et s'étendant parallèlement à l'axe longitudinal (X-X).

13. Valve selon la revendication 12, ***caractérisée en ce que*** ledit prolongement transversal (52a) de la languette (52) a une forme arrondie.

14. Valve selon la revendication 1, ***caractérisée en ce que*** ladite deuxième saillie (32a) du prolongement (20) du corps de la valve possède une section transversale sensiblement en forme de trapèze isocèle avec des bases parallèles à l'axe longitudinal.

15. Valve selon la revendication 14, ***caractérisée en ce que*** les coins de ladite saillie trapézoïdale sont arrondis.
